# NEUE EUROPÄISCHE PATENTSCHRIFT

(11) **EP 0 616 156 B2**
(45) Veröffentlichungstag und Bekanntmachung des Hinweises auf die Entscheidung über den Einspruch: **13.11.2002**
(45) Hinweis auf die Patenterteilung: 14.05.1997
(21) Anmeldenummer: 94102357.4
(22) Anmeldetag: 17.02.1994
(51) Int. Cl.: F16K 11/074, F16K 27/04

(54) **Steuerpatrone für eine Einhebel-Mischarmatur**
Cartridge for a single handle mixing valve
Cartouche pour une mitigeuse

(30) Priorität: 16.03.1993 CH 78693
(43) Veröffentlichungstag der Anmeldung: 21.09.1994
(73) Patentinhaber: KWC AG, CH-5726 Unterkulm (CH)
(72) Erfinder: Graber, Heinz, CH-5727 Oberkulm (CH)
(74) Vertreter: Patentanwälte Schaad, Balass, Menzl & Partner AG

(56) Entgegenhaltungen:
- AU-A- 29 156
- DE-A- 3 015 178
- DE-A- 3 243 268
- DE-A- 3 518 698
- FR-A- 2 506 886
- FR-A- 2 525 319

## Beschreibung

Die Erfindung bezieht sich auf eine Steuerpatrone für eine Einhebel-Mischarmatur nach Anspruch 1. An einer solchen Mischarmatur lassen sich an dem einzigen Betätigungshebel die Durchfluss-Kaltwassermenge sowie die Mischtemperatur zwischen Kalt- und Warmwasser einstellen.

Bekannte Mischarmaturen sind im allgemeinen an derjenigen Stelle eingebaut, an der die Wasserleitungen entweder aus der Wand oder aus einem Waschbecken hervortreten. Dies hat in der Regel zur Folge, dass bei einer Betätigung der Armatur mit nassen Händen Wasser auf den hinteren Absatz bzw. Rand des Waschbekkens tropft, dort eintrocknet und Kalkansatz, gegebenenfalls mit Seife und Schmutz vermischt, hinterlässt. Eine solche Verunreinigung lässt sich beispielsweise mit einer sanitären Auslaufarmatur nach der DE-OS 30 15 178 vermeiden, die im Mündungsbereich eines Auslaufarmes angeordnet ist. Diese bekannte, mit einem radial angeordneten Griff ausgerüstete Auslaufarmatur ist jedoch zum Mischen von Kalt- und Warmwasser nicht geeignet.

Sehr ähnlich aufgebaut ist die in DE-A1-32 43 268 offenbarte und ebenfalls für den Mündungsbereich eines Auslaufarmes vorgesehene Einhebel-Auslaufarmatur, mit Hilfe derer auch das Mischen von Kalt- und Warmwasser möglich ist. Die Armatur weist eine drehfest in den Auslaufarm einzusetzende Steuerscheibe und eine an diese angrenzende drehbare zweite Steuerscheibe auf. Die drehbare Steuerscheibe ist drehfest in einer Mitnehmerbuchse angeodnet, die zugleich den Auslass bildet und daher stromabwärts für die Aufnahme z.B. eines Strahlenreglers ausgestaltet ist. An der Mitnehmerbuchse greift ein radial abstehendes Betätigungselement an, mit dessen Hilfe die Mitnehmerbuchse samt Strahlenregler und drehbarer Steuerscheibe zur Einstellung des Kalt-Warmwasserverhältnisses verdreht werden kann. Die Elemente dieser Armatur sind einzeln in den Auslaufarm einzusetzen und durch eine Schraube oder Überwurfmutter zu sichern.

Eine Mischarmatur ist auch in der FR-A-2 506 886 offenbart. Sie weist einen eine Mischkammer bildenden Hohlraum auf, in dem ein Tragkörper angeordnet ist. Kanäle im Tragkörper bilden Verlängerungen der in den Hohlraum führenden Kaltwasser- und Warmwasser-Anschlüsse und nehmen je einen pillenartig geformten, einen Durchlass aufweisenden Keramikkörper auf. Diese Keramikkörper bilden ein mit einer Steuerscheibe zusammenwirkendes Steuerelement. Die Steuerscheibe ist mit einer koxial zur Drehachse der Steuerscheibe angeordneten Welle verbunden, die zur Steuerung des Wasserflusses und der Temperatur drehbar ist. Der Auslass der Mischkammer verläuft bezüglich der Achse in radialer Richtung.

Mischarmaturen bekannter Bauart sind entweder zu gross, um sie im Mündungsbereich eines Auslaufarmes einzubauen, oder sie lassen keine von der regelnden Stellung des Betätigungselementes unabhängige Ausrichtung des ausfliessenden Wasserstrahles zu.

Der Erfindung liegt deshalb die Aufgabe zugrunde, eine Steuerpatrone für eine Einhebel-Mischarmatur zu schaffen, die wenig Platz beansprucht, vorzugsweise derart klein ist, dass sie im Mündungsbereich eines Auslaufarmes einbaubar ist, und eine von der Stellung des Betätigungselementes unabhängige Ausrichtung des ausfliessenden Wasserstrahles erlaubt.

Die gestellte Aufgabe wird erfindungsgemäss durch die Merkmale des Anspruchs 1 gelöst.

Die abhängigen Ansprüche kennzeichnen bevorzugte Ausführungsformen der Erfindung.

Anhand der Zeichnungen wird ein Ausführungsbeispiel der Erfindung näher erläutert. Es zeigt:
- Fig. 1: eine in einen Auslaufarm eingebaute Steuerpatrone einer Einhebel-Mischarmatur im Längsschnitt und
- Fig. 2: zwei Steuerscheiben der Steuerpatrone.

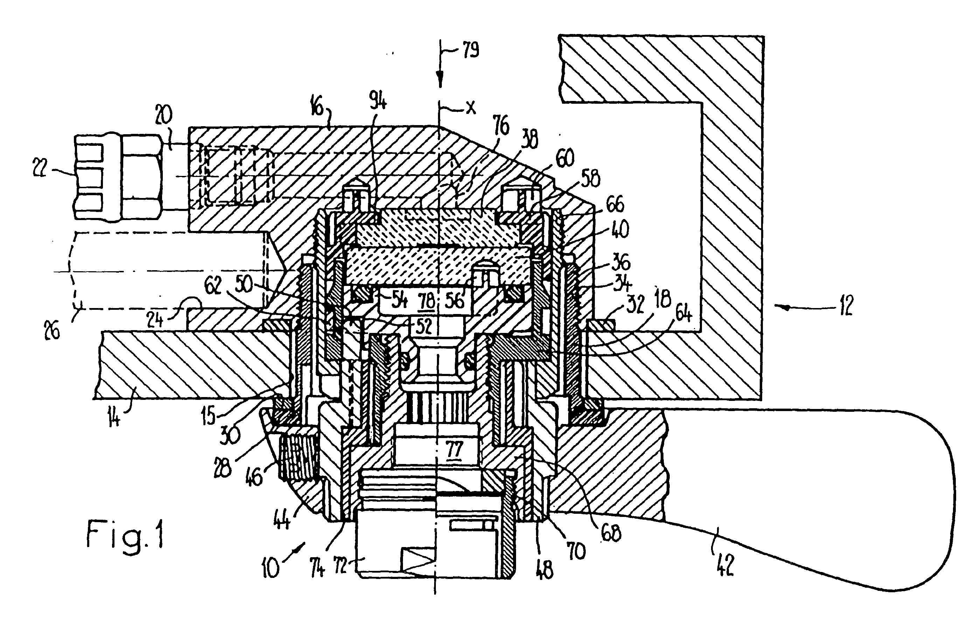

Die in der Fig. 1 dargestellte Steuerpatrone **10** ist im Mündungsbereich **12** eines Auslaufarmes **14** in einer Öffnung **15** eingebaut. Sie weist ein Armaturengehäuse **16** auf, in welches eine Befestigungsmutter **18** eingeschraubt ist. Das innerhalb des Auslaufarmes **14** eingesetzte Armaturengehäuse **16** ist mit zwei nebeneinanderliegenden Anschlussstutzen **20**, von denen in der Zeichnung der hintere durch den vorderen verdeckt ist, für Kalt- und Warmwasser ausgerüstet, an denen innerhalb des Auslaufarmes **14** geführte Zuleitungs-Schläuche oder -Rohre **22** angeschlossen sind. Ein in eine radial angeordnete Bohrung **24** im Armaturengehäuse **16** vorübergehend eingeschobener Dorn **26** dient als Montagehilfe beim Einbau der Steuerpatrone **10**.

Die Befestigungsmutter **18** weist einem Flansch **28** auf, mit dem sie sich über einen Zwischenring **30** auf der Aussenseite des Auslaufarmes **14** abstützt. Auf der Innenseite dient ein Zwischenring **32** als Zwischenlage zwischen dem Armaturengehäuse **16** und der Innenseite des Auslaufarmes **14**. Der Auslaufarm kann entweder aus Metall oder als Bestandteil eines nicht dargestellten Waschbeckens aus Keramik bestehen.

Die Befesligungsmutter **18** ist mittels eines koaxialen Aussengewindes **34** in ein Innengewinde **36** des Armaturengehäuses **16** eingeschraubt.

Als Absperr- und Durchflussmengen-Verstellelemente für Kalt- und Warmwasser dienen eine obenliegende gehäusefeste erste Keramik-Steuerscheibe **38** und eine untenliegende drehbare zweite Keramik-Steuerscheibe **40**; nachfolgend als erste und zweite Steuerscheibe bezeichnet. Beiden Steuerscheiben **38**, **40** ist eine feste Mittelachse zugeordnet, die mit der Mittelachse **X** der Steuerpatrone **10** zusammenfällt. Die zweite Steuerscheibe **40** ist mittels eines von Hand schwenkbaren Betätigungshebels **42** um einen Winkel von etwa 100° drehbar. Beide Steuerscheiben **38**, **40** weisen noch zu beschreibende Durchlässe auf.

Der einen Überwurfring **44** aufweisende Betätigungshebel **42** ist mittels einer Innensechskant-Stellschraube **46** auf einer ersten Mitnehmerbuchse **48** fixiert. Diese weist einen sich in axialer Richtung erstrekkenden Mitnehmerzapfen **50** auf, der in eine Aussparung **52** einer zweiten Mitnehmerbuchse **54** eingreift. Diese ihrerseits weist einen Mitnehmerzapfen **56** auf, der in die zweite Steuerscheibe **40** eingreift. Damit ist eine Drehverbindung vom Betätigungshebel **42** zur zweiten Steuerscheibe **40** hergestellt.

Ein die erste Steuerscheibe **38** verdrehsicher tragender Patronenboden **58** mit Verdrehsicherungszapfen **60** ist im Armaturengehäuse **16** verankert. Mit dem Patronenboden **58** ist über eine weitere Verdrehsicherung **62** ein Patronengehäuse **64** verbunden und mittels einer Patronen-Befestigungsmutter **66** im Armaturengehäuse **16** befestigt. In das Patronengehäuse **64** ist ebenlalls verdrehsicher ein Halteteil **68** eingesetzt, welches ein Innengewinde **70** zum Einschrauben eines Mundstückes, beispielsweise eines Strahlreglers **72**, aufweist. Ein Zwischenelement **74** dient als Lagerbuch-se für die erste Mitnehmerbuchse **48** und als Drehwinkelbegrenzer zur Begrenzung der Temperatur.

Über zwei vom Betrachter aus hintereinanderliegende axial gerichtete Durchflussbohrungen **76** erfolgt der Zufluss des Kalt- und Warmwassers in Richtung der ersten Steuerscheibe **38**. In einer Mischkammer **78** unterhalb der zweiten Steuerscheibe **40** werden Kalt- und Warmwasser in Abhängigkeit von der Stellung des Betätigungshebels **42** miteinander vermischt. Von den Durchflussbohrungen **76** bis zu einem Auslass **77** erfolgt, abgesehen von Verwirbelungen, keine Umkehrung der Strömung, so dass diese im wesentlichen eine einzige Durchflussrichtung **79** beibehält.

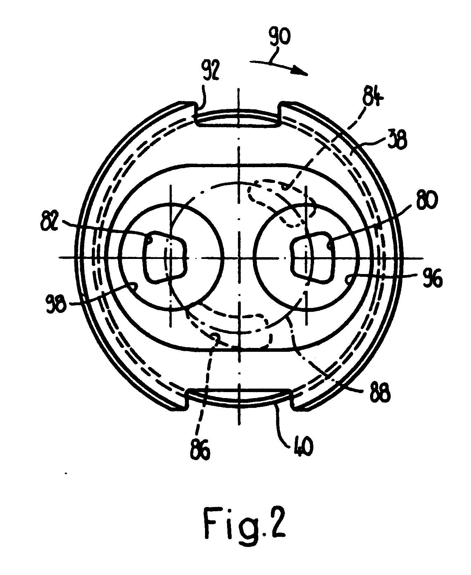

Die Fig. 2 zeigt die beiden unmittelbar aneinandergrenzenden Steuerscheiben **38**, **40** in der Draufsicht bei geschlossener Stellung. Die gehäusefeste erste Steuerscheibe **38** weist zwei Einlass-Durchlässe auf, nämlich einen Kaltwasser-Durchlass **80** und einen Warmwasser-Durchlass **82.** Die darunterliegende zweite Steuerscheibe **40** weist einen Kaltwasser-Durchlass **84** und einen Warmwasser-Durchlass **86** auf. Die Durchlässe **80**, **82**, **84**, **86** beider Steuerscheiben **38**, **40** liegen mindestens annähernd auf einer Kreislinie **88** derart verteilt, dass beim Drehen der zweiten Steuerscheibe **40** in Öffnungsrichtung **90** nacheinander die Kaltwasser-Zufuhr bis etwa zum Maximum freigegeben wird, danach zusätzlich die Warmwasser-Zufuhr freigegeben und anschliessend die Kaltwasser-Zufuhr bis auf Null gedrosselt wird.

Die erste Steuerscheibe **38** weist an ihrem Umfang zwei Ausschnitte **92** als Verdrehsicherung auf, in welche im Patronenboden **58** angeordnete Vorsprünge **94** (Fig. 1) eingreifen.

Die Durchlässe **80**, **82** in der ersten Steuerscheibe **38** liegen sich diametral gegenüber. Die Durchlässe **84**, **86** in der zweiten Steuerscheibe **40** sind dagegen zur Erzielung der vorstehend genannten Funktion derart versetzt, dass der Kaltwasser-Durchlass **84** vor dem Warmwasser-Durchlass **86** öffnet. Ferner sind die Durchlässe **84**, **86** in der zweiten Steuerscheibe **40** in Umfangsrichtung profiliert. Bei Drehung in Öffnungsrichtung **90** weisen der Kaltwasser-Durchlass **84** einen abnehmenden Durchlass-Querschnitt und der Warmwasser-Durchlass **86** einen zunehmenden Durchlass-Querschnitt auf, bezogen auf die Durchlässe **80**, **82** der ersten Steuerscheibe **38**.

Zur Erzielung einer stetigen Drosselung kann mindestens einer der Durchlässe **80**, **82**; **84**, **86** in mindestens einer der Steuerscheiben **38**, **40** in axialer Richtung profiliert sein.

Falls die Temperatur des zugeführten Warmwassers für den Gebrauch zu hoch ist, lässt sich der Drehwinkel der zweiten Steuerscheibe **40** durch eine umfangsseitige Versetzung bzw. Verstellung des Zwischenelementes **74** begrenzen. Dazu ist dieses einen Drehbegrenzungs-Anschlag aufweisende Element nach Lösen entsprechender Teile umsteckbar, indem es sich aus einer Verzahnung herausziehen und drehversetzt wieder einsetzen lässt.

Aus den vorstehenden Erläuterungen geht hervor, dass die zweite Steuerscheibe **40** ausschliesslich um die Mittelachse **X** drehbar ist. Im Unterschied zu bekannten Ausführungen ist diese Steuerscheibe radial nicht verschiebbar.

Anstelle der beschriebenen zwei Durchlässe **84**, **86** der zweiten Steuerscheibe **40** ist es auch möglich, in dieser Scheibe nur einen Durchlass anzuordnen, um die geforderten Bedingungen zu erfüllen, dass beim Drehen in Öffnungsrichtung **90** zuerst die Kaltwasser-Zufuhr und dann die Warmwasser-Zufuhr freigegeben und danach die Kaltwasser-Zufuhr gedrosselt wird. In einem solchen Fall müssten jedoch die Durchflussöffnungen in der ersten Steuerscheibe um einen Winkel zueinander versetzt sein, der kleiner als 180° ist.

Als Werkstoff für die Steuerscheiben **38, 40** hat sich bisher Keramik am besten bewährt. Es ist jedoch nicht ausgeschlossen, dass auch andere geeignete Werkstoffe verwendbar sind.

Die erste Steuerscheibe **38** weist auf ihrer Oberseite die Durchlässe **80, 82** umgebende Vertiefungen **96, 98** auf.

## Patentansprüche

1. Steuerpatrone für eine Einhebel-Mischarmatur, mit einem Anschlüsse für die Zufuhr von Kalt- und Warmwasser aufweisenden Gehäuse (**16, 18**), in welchem ein Steuerelement und eine daran anliegende Steuerscheibe (**40**) zu einer zentralen Achse (**X**) der Steuerpatrone (**10**) koaxial angeordnet sind, wobei das Steuerelement gehäusefest und die Steuerscheibe (**40**) mittels eines um die Achse (**X**) drehbaren Betätigungselementes (**42**) drehbar ist, das Steuerelement ausschliesslich zwei Durchlässe (**80, 82**) aufweist, von denen der erste (**80**) mit dem Kaltwasser-Anschluss und der zweite (**82**) mit dem Warmwasser-Anschluss verbunden ist, und die Steuerscheibe (**40**) mindestens einen, in eine mit einem Auslass (**77**) verbundene Mischkammer (**78**) mündenden Durchlass (**84, 86**) aufweist, die Einlass-Durchlässe (**80, 82**) des Steuerelements sowie der Durchlass (**84, 86**) der Steuerscheibe (**40**) mindestens annähernd auf einer gemeinsamen Kreislinie (**88**) derart verteilt angeordnet sind, dass bei Drehung der Steuerscheibe (**40)** in Öffnungsrichtung (**90**) nacheinander die Kaltwasser-Zufuhr bis etwa zum Maximum freigegeben wird, danach zusätzlich die Warmwasser-Zufuhr freigegeben wird und anschliessend die Kaltwasser-Zufuhr gedrosselt wird, wobei das Steuerelement eine an der genannten Steuerscheibe (**40**) anliegende, die Einlass-Durchlässe (**88,82**) aufweisende weitere Steuerscheibe (**38**) ist, die Durchflussrichtung (**79**) vom Einlass in die weitere Steuerscheibe (**38**), durch die unterhalb der Steuerscheibe (**40**) angeordnete Mischkammer (**78**) bis zum Auslass (**77**) im wesentlichen geradlinig in Richtung der Achse (**X**) verläuft, der Auslass (**77**) an einem im Gehäuse (**16, 18**) verdrehsicher eingesetzten Halteteil (**68**) angeordnet ist, und die Mischkammer (**78**) in einer einerseits mit der Steuerscheibe (**40**) und andererseits über eine den Halteteil (**68**) durchgreifende Verbindung mit dem Betätigungselement (**42**) drehfest verbundenen Mitnehmerbuchse (**54**) angeordnet ist.

2. Steuerpatrone nach Anspruch 1, **dadurch gekennzeichnet, dass** die Mitnehmerbuchse (**54**) mit einer den Auslass (**77**) und den Halteteil (**68**) umgebenden, um die Achse (**X**) drehbaren weiteren Mitnehmerbuchse (**48**) drehfest verbunden ist, die ihrerseits mit dem Betätigungselement (**42**) drehfest verbunden ist, wobei die Verbindung der beiden Mitnehmerbuchsen (**48,54**) den Halteteil (**68**) durchgreift.

3. Steuerpatrone nach Anspruch 1 oder 2, **dadurch gekennzeichnet, dass** das zum Einbau in den Mündungsbereich (**12**) eines Auslaufarmes (**14**) bestimmte Gehäuse aus zwei miteinander verschraubbaren Teilen (**16, 18**) besteht, von denen das Armaturengehäuse (**16**) für die Anordnung in einem Hohlraum des Auslaufarmes (**14**) und eine Befestigungsmutter (**18**) für die Anordnung von aussen in einer Öffnung (**15**) des Auslaufarmes (**14**) bestimmt ist.

4. Steuerpatrone nach Anspruch 3, **dadurch gekennzeichnet, dass** das Armaturengehäuse (**16**) radial angeordnete Anschlussstutzen (**20**) für je eine Kalt- und eine Warmwasserzuleitung (**22**) aufweist.

5. Steuerpatrone nach einem der Ansprüche 1 bis 4, **dadurch gekennzeichnet, dass** die Steuerscheiben (**38, 40**) aus einem keramischen Werkstoff bestehen.

6. Steuerpatrone nach einem der Ansprüche 1 bis 5, **dadurch gekennzeichnet, dass** die Steuerscheibe (**40**) insgesamt zwei Durchlässe (**84, 86**) aufweist, von denen der erste (**84**) mit dem Kaltwasser-Durchlass (**80**) und der zweite (**86**) mit dem Warmwasser-Durchlass (**82**) der weiteren Steuerscheibe (**38**) korrespondiert.

7. Steuerpatrone nach Anspruch 6, **dadurch gekennzeichnet, dass** sich die beiden Durchlässe (**80, 82**) in der weiteren Steuerscheibe (**38**) diametral gegenüberliegen.

8. Steuerpatrone nach Anspruch 7, **dadurch gekennzeichnet, dass** die Durchlässe (**84, 86**) der Steuerscheibe (**40**) derart profiliert sind, dass beim Drehen in Öffnungsrichtung (**90**) der zuerst öffnende Kaltwasser-Durchlass (**84**) einen abnehmenden Durchlass-Querschnitt und der danach öffnende Warmwasser-Durchlass (**86**) einen zunehmenden Durchlass-Querschnitt aufweist, bezogen auf die Durchlässe (**80, 82**) der weiteren Steuerscheibe (**38**).

9. Steuerpatrone nach einem der Ansprüche 1 bis 8, **dadurch gekennzeichnet, dass** mindestens einer der Durchlässe (**80, 82; 84, 86**) in mindestens einer der Steuerscheiben (**38, 40**) zur Erzielung einer stetigen Drosselung in axialer Richtung profiliert ist.

10. Steuerpatrone nach einem der Ansprüche 1 bis 9, **dadurch gekennzeichnet, dass** der maximale Drehwinkel der Steuerscheibe (**40**) mindestens annähernd 100° beträgt.

11. Steuerpatrone nach einem der Ansprüche 1 bis 10, **dadurch gekennzeichnet, dass** der Drehwinkel der Steuerscheibe (**40**) durch Begrenzungsmittel (**74**) auf einen kleineren als den maximalen Drehwinkel einstellbar ist.

12. Mischarmatur mit einer Steuerpatrone nach einem der Ansprüche 1 bis 11, **dadurch gekennzeichnet, dass** die Steuerpatrone (**10**) im Mündungsbereich (**12**) eines Auslaufarmes (**14**) in einer Öffnung (**15**) im wesentlichen versenkt eingebaut ist.

## Claims

1. Control cartridge for a single-lever mixer fitting, having a housing (16, 18) which has connections for the supply of cold and hot water and in which a control element and a control disc (40) which butts against the latter are arranged coaxially with respect to a central axis (X) of the control cartridge (10), the control element being fixed to the housing and it being possible for the control disc (40) to be rotated by means of an actuating element (42) which can be rotated around the axis (X), the control element having exclusively two through-passages (80, 82), of which the first (80) is connected to the cold-water connection and the second (82) is connected to the hot-water connection, and the control disc (40) having at least one through-passage (84, 86) which opens into a mixing chamber (78) which is connected to an outlet (77), the inlet through-passages (80, 82) of the control element and the through-passage (84, 86) of the control disc (40) being arranged in such a manner that they are distributed approximately on a common circle line (88), such that, on rotation of the control disc (40) in the opening direction (90), one after the other the cold-water supply is released up to the maximum extent, then, in addition, the hot-water supply is released and, subsequently, the cold-water supply is throttled, it being the case that the control element is a further control disc (38) which butts against the abovementioned control disc (40) and contains the inlet through-passages (80, 82), the through-flow direction (79) from the inlet into the further control disc (38), through the mixing chamber (78) arranged beneath the control disc (40), to the outlet (77) runs in an essentially rectilinear manner in the direction of the axis (X), the outlet (77) is arrranged on a retaining part (68) which is introduced in the housing (16, 18) in a manner secured against rotation, and the mixing chamber (78) is arranged in a driver bush (54) which is connected in a rotationally fixed manner, on the one hand, to the control disc (40) and, on the other hand, via a connection engaging through the retaining part (68), to the actuating element (42).

2. Control cartridge according to Claim 1, **characterized in that** the driver bush (54) is connected in a rotationally fixed manner to a further driver bush (48) which encloses the outlet (77) and the retaining part (68), can be rotated around the axis (X) and, for its part, is connected in a rotationally fixed manner to the actuating element (42), the connection of the two driver bushes (48, 54) passing through the retaining part (68).

3. Control cartridge according to Claim 1 or 2, **characterized in that** the housing, intended for installation into the mouth region (12) of a discharge arm (14), comprises two parts (16, 18) which can be screwed to one another and of which the fitting housing (16) is intended for arrangement in a cavity of the discharge arm (14) and a fastening nut (18) is intended for arrangement, from outside, in an opening (15) of the discharge arm (14).

4. Control cartridge according to Claim 3, **characterized in that** the fitting housing (16) has radially arranged connection stubs (20) for in each case one cold-water and one hot-water supply line (22).

5. Control cartridge according to one of Claims 1 to 4, **characterized in that** the control discs (38, 40) consist of a ceramic material.

6. Control cartridge according to one of Claims 1 to 5, **characterized in that** the control disc (40) has altogether two through-passages (84, 86), of which the first (84) corresponds with the cold-water through-passage (80), and the second (86) corresponds with the hot-water through-passage (82), of the further control disc (38).

7. Control cartridge according to Claim 6, **characterized in that** the two through-passages (80, 82) in the further control disc (38) are located diametrically opposite one another.

8. Control cartridge according to Claim 7, **characterized in that** the through-passages (84, 86) of the control disc (40) are profiled such that, on rotation in the opening direction (90), the cold-water through-passage (84) opening first of all has a decreasing through-passage cross-section and the subsequently opening hot-water through-passage (86) has an increasing through-passage cross-section, in relation to the through-passages (80, 82) of the further control disc (38).

9. Control cartridge according to one of Claims 1 to 8, **characterized in that** at least one of the through-passages (80, 82; 84, 86) in at least one of the control discs (38, 40) is profiled in the axial direction in order to achieve continuous throttling.

10. Control cartridge according to one of Claims 1 to 9, **characterized in that** the maximum angle of rotation of the control disc (40) is at least approximately 100E.

11. Control cartridge according to one of Claims 1 to 10, **characterized in that** the angle of rotation for the control disc (40) can be set, by delimiting means (74), to an angle which is smaller than the maximum angle of rotation.

12. Mixer fitting with a control cartridge according to one of Claims 1 to 11, **characterized in that** the control cartridge (10) is installed such that it is essentially countersunk in an opening (15), in the mouth region (12) of a discharge arm (14).

## Revendications

1. Cartouche de mitigeur à levier unique avec un corps (16, 18) comportant des raccords pour l'arrivée d'eau froide et d'eau chaude, dans lequel un élément de commande et un disque de commande (40), appliqué sur celui-ci, sont disposés coaxialement selon l'axe central (X) de la cartouche (10), dans lequel l'élément de commande est fixe dans le corps et le disque de commande (40) peut tourner au moyen d'un organe de manoeuvre (42) pouvant tourner autour de l'axe (X) ; l'élément de commande (38) présentant exclusivement deux passages (80, 82), dont le premier (80) est relié au raccord d'eau froide et le second (82) est relié au raccord d'eau chaude, le disque de commande (40) comportant au moins un passage (84, 86) débouchant dans une chambre de mélange (78) raccordée à une sortie (77), les passages (80, 82) de l'élément de commande ainsi que le passage (84, 86) du disque de commande (40) étant répartis au moins approximativement sur une ligne circulaire commune (88), de telle façon que, par une rotation du disque de commande (40) dans le sens de l'ouverture (90), successivement, l'arrivée de l'eau froide soit dégagée sensiblement jusqu'à son maximum et qu'ensuite, l'arrivée de l'eau chaude soit également dégagée, enfin que l'arrivée de l'eau froide soit étranglée, dans laquelle l'élément de commande est un autre disque de commande (38) appliqué contre le disque de commande précité (40) et présentant les passages d'entrée (80, 82), le sens de l'écoulement (79) étant orienté sensiblement en ligne droite dans la direction de l'axe (X), depuis l'entrée dans l'autre disque de commande (38), à travers la chambre de mélange (78) disposée en dessous du disque de commande (40) et jusqu'à la sortie (77), la sortie (77) étant disposée dans une pièce de maintien (68), calée sans faculté de rotation dans le corps (16, 18), et la chambre de mélange (78) étant disposée dans une douille d'entraînement (54), réunie d'une part au disque tournant (40) et d'autre part, solidairement en rotation, à l'organe de manoeuvre (42) via une liaison qui traverse la pièce de maintien (68).

2. Cartouche suivant la revendication 1, **caractérisée en ce que** la douille d'entraînement (54) est assemblée solidaire en rotation avec une autre douille d'entraînement (48), qui entoure la sortie (77) et la pièce de maintien (68), cette autre douille pouvant tourner autour de l'axe (X), et étant à son tour assemblée solidaire en rotation avec l'organe de manoeuvre (42), la connexion des deux douilles d'entraînement (48, 54) traversant la pièce de maintien (68).

3. Cartouche suivant l'une ou l'autre des revendications 1 et 2, **caractérisée en ce que** le corps destiné au montage dans la région de l'embouchure (12) d'un bras de sortie (14), se compose de deux parties à visser l'une à l'autre, parties parmi lesquelles un corps de robinetterie (16) est destiné à être monté dans une cavité du bras de sortie (14) et un écrou de fixation (18) est destiné à être placé, par l'extérieur, dans une ouverture (15) du bras de sortie (14).

4. Cartouche suivant la revendication 3, **caractérisée en ce que** le corps de robinetterie (16) présente des embouts de raccordement (20) orientés radialement pour les conduites d'arrivée d'eau froide et d'eau chaude (22) respectivement.

5. Cartouche suivant l'une quelconque des revendications 1 à 4, **caractérisée en ce que** les disques de commande (38, 40) sont constitués d'une matière céramique.

6. Cartouche suivant l'une quelconque des revendications 1 à 5, **caractérisée en ce que** le disque de commande (40) présente au total deux passages (84, 86), dont le premier correspond au passage d'eau froide (80) et le second (86) correspond au passage d'eau chaude (82) de l'autre disque de commande (38).

7. Cartouche suivant la revendication 6, **caractérisée en ce que** les deux passages (80, 82) dans l'autre disque de commande (38) sont diamétralement opposés.

8. Cartouche suivant la revendication 7, **caractérisée en ce que** les passages (84, 86) du disque de commande (40) sont profilés de telle façon que, lors d'une rotation dans le sens de l'ouverture (90), le passage d'eau froide (84), qui s'ouvre le premier, présente une section décroissante et le passage d'eau chaude (86), qui s'ouvre ensuite, présente une section croissante, par rapport aux passages (80, 82) de l'autre disque de commande (38).

9. Cartouche suivant l'une quelconque des revendications 1 à 8, **caractérisée en ce qu'**au moins un des passages (80, 82 ; 84, 86) dans au moins un des disques de commande (38, 40), est profilé de façon à produire un étranglement permanent, en direction axiale.

10. Cartouche suivant l'une quelconque des revendications 1 à 9, **caractérisée en ce que** l'angle de rotation maximal du disque de commande (40) vaut au moins à peu près 100°.

11. Cartouche suivant l'une quelconque des revendications 1 à 10, **caractérisée en ce que** l'angle de rotation du disque de commande (40) peut être réglé par des moyens de limitation (74) à une valeur inférieure à l'angle de rotation maximal.

12. Mitigeur avec une cartouche suivant l'une quelconque des revendications 1 à 11, **caractérisé en ce que** la cartouche (10) est montée en position essentiellement noyée dans une ouverture (15), dans la région de l'embouchure (12) d'un bras de sortie (14).
